# EUROPEAN PATENT APPLICATION

(11) **EP 2 400 342 A1**
(43) Date of publication of application: **28.12.2011**
(21) Application number: 09842703.2
(22) Date of filing: 25.11.2009
(51) Int. Cl.: G02F 1/17

(54) **DISPLAY ELEMENT AND ELECTRIC DEVICE USING SAME**

(30) Priority: 03.04.2009 JP 2009091180
(71) Applicant: Sharp Kabushiki Kaisha, Osaka-shi, Osaka 545-8522 (JP)
(72) Inventor: Matsuoka, Toshiki, Osaka-shi, Osaka 545-8522 (JP); Nakamura, Kozo, Osaka-shi, Osaka 545-8522 (JP); Ueki, Shun, Osaka-shi, Osaka 545-8522 (JP); Tomotoshi, Takuma, Osaka-shi, Osaka 545-8522 (JP)
(74) Representative: Müller - Hoffmann & Partner
(86) International application number: PCT/JP2009/069853
(87) International publication number: WO 2010/113352

(57) **Abstract**

A display element (10) includes an upper substrate (first substrate) (2), a lower substrate (second substrate) (3), and a conductive liquid (16) that is sealed in a display space (S) formed between the upper substrate (2) and the lower substrate (3) so as to be moved toward an affective display region (P1) or a non-effective display region (P2). A reference electrode (5) and a scanning electrode (6) are provided on the lower substrate (3) so as to be located on one and the other of the effective display region (P1) side and the non-effective display region (P2) side, respectively. An end portion of the reference electrode (5) that is opposite to a moving direction of the conductive liquid (16) relative to the reference electrode (5) and an end portion of the scanning electrode (6) that is opposite to a moving direction of the conductive liquid (16) relative to the scanning electrode (6) are cut.

## Description

### Technical Field

The present invention relates to a display element that displays information such as images and characters by moving a conductive liquid, and an electric device using the display element.

### Background Art

In recent years, as typified by an electrowetting type display element, a display element that displays information by utilizing a transfer phenomenon of a conductive liquid due to an external electric field has been developed and put to practical use.

Specifically, such a conventional display element includes first and second electrodes, first and second substrates, and a colored droplet that is sealed in a display space formed between the first substrate and the second substrate and serves as a conductive liquid that is colored a predetermined color (see, e.g., Patent Document 1). In this conventional display element, a voltage is applied to the colored droplet via the first electrode and the second electrode to change the shape of the colored droplet, thereby changing the display color on a display surface.

For the above conventional display element, another configuration also has been proposed, in which the first electrode and the second electrode are arranged side by side on the first substrate and electrically insulated from the colored droplet, and a third electrode is provided on the second substrate so as to face the first electrode and the second electrode. Moreover, a light-shielding shade is provided above the first electrode. Thus, the first electrode side and the second electrode side are defined as a non-efiective display region and an effective display region, respectively. With this configuration, a voltage is applied so that a potential difference occurs between the first electrode and the third electrode or between the second electrode and the third electrode. In this case, compared to the way of changing the shape of the colored droplet, the colored droplet can be moved toward the first electrode or the second electrode at a high speed, and thus the display color on the display surface can be changed at a high speed as well.

### Prior Art Documents

### Patent Documents

Patent Document 1: JP 2004-252444A

### Disclosure of Invention

### Problem to be Solved by the Invention

However, in the above conventional display element, when the power consumption is intended to be reduced, the colored droplet (conductive liquid) is unnecessarily moved, and thus may reduce the display quality.

Specifically, in the conventional display element, a negative potential voltage is always applied to the third electrode and a positive potential voltage is always applied to one of the first and second electrodes for each of the display units (pixels). Moreover, in this conventional display element, the colored droplet (conductive liquid) is moved toward the first electrode side (non-effective display region) or the second electrode side (effective display region), to which the positive potential voltage is applied, so that the display color on the display surface is changed to light display or dark display Therefore, the voltages have to be applied all the time regardless of the display color on the display surface. Thus, it is difficult for the conventional display element to reduce the power consumption.

In order to reduce the power consumption of the conventional display element, it may be possible to stop the application of the voltage to the first and second electrodes after the colored droplet has been moved to either the first electrode side or the second electrode side, thereby changing the display color on the display surface to light display or dark display. However, in the conventional display element, if the application of the voltage to the first and second electrodes is stopped, the colored droplet is unnecessarily moved, and thus may reduce the display quality In other words, if the application of the voltage to the first and second electrodes is stopped, the action of an electrowetting phenomenon on the colored droplet will be removed. This increases the interfacial tension between the colored droplet and the first substrate, and also causes the colored droplet to change to a spherical shape. Consequently, the colored droplet is unnecessarily moved, which may lead to a reduction in the display quality of the conventional display element.

With the foregoing in mind, it is an object of the present invention to provide a display element that can suppress an unnecessary movement of a conductive liquid and have excellent display quality even if the power consumption is reduced, and an electric device using the display element.

### Means for Solving Problem

To achieve the above object, a display element of the present invention includes the following: a first substrate provided on a display surface side; a second substrate provided on a non-display surface side of the first substrate so that a predetermined display space is formed between the first substrate and the second substrate; an effective display region and a non-effective display region that are defined with respect to the display space; and a conductive liquid sealed in the display space so as to be moved toward the effective display region or the non-effective display region. The display element is capable of changing a display color on the display surface side by moving the conductive liquid. The display element includes the following: a plurality of signal electrodes that are placed in the display space so as to come into contact with the conductive liquid, and are also provided along a predetermined arrangement direction; a plurality of reference electrodes that are provided on one of the first substrate and the second substrate so as to be electrically insulated from the conductive liquid and to be located on one of the effective display region side and the non-effective display region side, and are also arranged so as to intersect with the plurality of the signal electrodes; and a plurality of scanning electrodes that are provided on one of the first substrate and the second substrate so as to be electrically insulated from the conductive liquid and the plurality of the reference electrodes and to be located on the other of the effective display region side and the non-effective display region side, and are also arranged so as to intersect with the plurality of the signal electrodes. An end portion of each of the plurality of the reference electrodes that is opposite to a moving direction of the conductive liquid relative to the reference electrode and an end portion of each of the plurality of the scanning electrodes that is opposite to a moving direction of the conductive liquid relative to the scanning electrode are cut.

In the display element having the above configuration, the end portion of the reference electrode that is opposite to the moving direction of the conductive liquid relative to the reference electrode and the end portion of the scanning electrode that is opposite to the moving direction of the conductive liquid relative to the scanning electrode are cut. Thus, the conductive liquid can have the same shape regardless of the presence or absence of the application of the voltages to the reference electrode and the scanning electrode. Consequently, unlike the conventional example, the shape of the conductive liquid that is subjected to the action of the electrowetting phenomenon can be the same as the shape of the conductive liquid that is not subjected to the action of the electrowetting phenomenon. Therefore, unlike the conventional example, the display element can suppress an unnecessary movement of the conductive liquid and have excellent display quality even if the power consumption is reduced.

In the above display element, it is preferable that the end portion of each of the plurality of the reference electrodes that is opposite to the moving direction of the conductive liquid relative to the reference electrode and the end portion of each of the plurality of the scanning electrodes that is opposite to the moving direction of the conductive liquid relative to the scanning electrode are cut based on a shape of the conductive liquid when no voltage is applied.

In this case, the conductive liquid can have the same shape more reliably regardless of the presence or absence of the application of the voltages to the reference electrode and the scanning electrode, and thus a movement of the conductive liquid can be suppressed more reliably.

In the above display element, each of the plurality of the reference electrodes may have C-cut portions in the end portion that is opposite to the moving direction of the conductive liquid relative to the reference electrode so that the end portion is in the form of a polygon, and each of the plurality of the scanning electrodes may have C-cut portions in the end portion that is opposite to the moving direction of the conductive liquid relative to the scanning electrode so that the end portion is in the form of a polygon.

In this case, the conductive liquid can have the same shape regardless of the presence or absence of the application of the voltages to the reference electrode and the scanning electrode because of the C-cut portions.

In the above display element, each of the plurality of the reference electrodes may have R-cut portions in the end portion that is opposite to the moving direction of the conductive liquid relative to the reference electrode so that the end portion is in the form of a circular arc, and each of the plurality of the scanning electrodes may have R-cut portions in the end portion that is opposite to the moving direction of the conductive liquid relative to the scanning electrode so that the end portion is in the form of a circular arc.

In this case, the conductive liquid can have the same shape regardless of the presence or absence of the application of the voltages to the reference electrode and the scanning electrode because of the R-cut portions.

In the above display element, it is preferable that the plurality of the signal electrodes are provided along a predetermined arrangement direction, and the plurality of the reference electrodes and the plurality of the scanning electrodes are alternately arranged so as to intersect with the plurality of the signal electrodes. It is also preferable that the display element includes the following: a signal voltage application portion that is connected to the plurality of the signal electrodes and applies a signal voltage in a predetermined voltage range to each of the signal electrodes in accordance with information to be displayed on the display surface side; a reference voltage application portion that is connected to the plurality of the reference electrodes and applies one of a selected voltage and a non-selected voltage to each of the reference electrodes, the selected voltage allowing the conductive liquid to move in the display space in accordance with the signal voltage and the non-selected voltage inhibiting a movement of the conductive liquid in the display space; and a scanning voltage application portion that is connected to the plurality of the scanning electrodes and applies one of a selected voltage and a non-selected voltage to each of the scanning electrodes, the selected voltage allowing the conductive liquid to move in the display space in accordance with the signal voltage the non-selected voltage inhibiting a movement of the conductive liquid in the display space.

In this case, a matrix-driven display element with excellent display quality can be provided.

In the above display element, a plurality of pixel regions may be provided on the display surface side, the plurality of the pixel regions may be located at each of the intersections of the plurality of the signal electrodes and the plurality of the scanning electrodes, and the display space in each of the pixel regions may be partitioned by a partitions.

In this case, the display color on the display surface side can be changed for each pixel by moving the conductive liquid in each of the pixels on the display surface side.

In the above display element, the plurality of the pixel regions may be arranged in a honeycomb array on the display surface side.

In this case, the ratio of the effective display region to the pixel region can be easily increased.

In the above display element, the plurality of the pixel regions may be provided in accordance with a plurality of colors that enable full-color display to be shown on the display surface side.

In this case, the color image display can be performed by moving the corresponding conductive liquid properly in each of the pixels.

In the above display element, it is preferable that an insulating fluid that is not mixed with the conductive liquid is movably sealed in the display space.

In this case, the speed of movement of the conductive liquid can be easily improved.

In the above display element, it is preferable that a dielectric layer is formed on the surfaces of the plurality of the reference electrodes and the plurality of the scanning electrodes.

In this case, the dielectric layer reliably increases the electric field applied to the conductive liquid, so that the speed of movement of the conductive liquid can be more easily improved.

In the above display element, the non-effective display region may be defined by a light-shielding layer that is provided on one of the first substrate and the second substrate, and the effective display region may be defined by an aperture formed in the light-shielding layer.

In this case, the effective display region and the non-effective display region can be properly and reliably defined with respect to the display space.

In the above display element, it is preferable that an aperture shape of the aperture is determined based on a shape of one of the reference electrode and the scanning electrode that is located on the effective display region side.

In this case, the aperture shape of the aperture in the light-shielding layer can be appropriately determined, compared to the case where the aperture shape is not determined based on the shape of one of these electrodes.

An electric device of the present invention includes a display portion that displays information including characters and images. The display portion includes any of the above display elements.

In the electric device having the above configuration, the display portion uses the display element that can suppress an unnecessary movement of the conductive liquid and have excellent display quality even if the power consumption is reduced. Thus, a high-performance electric device including the display portion with excellent display quality can be easily provided.

### Effects of the Invention

The present invention can provide a display element that can suppress an unnecessary movement of the conductive liquid and have excellent display quality even if the power consumption is reduced, and an electric device using the display element.

### Brief Description of Drawings

[FIG. 1] FIG. 1 is plan view for explaining a display element and an image display apparatus of Embodiment 1 of the present invention.
[FIG. 2] FIG. 2 is an enlarged plan view showing the main configuration of the upper substrate in FIG. 1 when viewed from a display surface side.
[FIG. 3] FIG. 3 is an enlarged plan view showing the main configuration of the lower substrate in FIG. 1 when viewed from a non-display surface side.
[FIG. 4] FIGS. 4A and 4B are cross-sectional views showing the main configuration of the display element in FIG. 1 during non-CF color display and CF color display, respectively.
[FIG. 5] FIG. 5 is a diagram for explaining an operation example of the image display apparatus.
[FIG. 6] FIG. 6 is a diagram for explaining an operation example of the display element in a pixel region. FIG. 6A is a diagram for explaining an electrode configuration in the pixel region. FIG. 6B is a diagram for explaining a state of a conductive liquid when voltages are applied to the electrodes. FIG. 6C is a diagram for explaining a state of the conductive liquid when no voltage is applied to the electrodes.
[FIG. 7] FIG. 7 is an enlarged plan view showing the main configuration of a lower substrate in a display element of Embodiment 2 of the present invention when viewed from a non-display surface side.
[FIG. 8] FIG. 8 is a diagram for explaining an operation example of the display element shown in FIG. 7 in a pixel region. FIG. 8A is a diagram for explaining an electrode configuration in the pixel region. FIG. 8B is a diagram for explaining a state of a conductive liquid when voltages are applied to the electrodes. FIG. 8C is a diagram for explaining a state of the conductive liquid when no voltage is applied to the electrodes.
[FIG. 9] FIG. 9 is an enlarged plan view showing the main configuration of an upper substrate in a display element of Embodiment 3 of the present invention when viewed from a display surface side.
[FIG. 10] FIG. 10 is an enlarged plan view showing the main configuration of a lower substrate in the display element of Embodiment 3 of the present invention when viewed from a non-display surface side.
[FIG. 11] FIG. 11 is a diagram for explaining the effect of a honeycomb array in the display element shown in FIG. 9. FIG. 11A is a plan view of a pixel region of the display element shown in FIG. 2. FIG. 11B is a plan view of a pixel region of the display element shown in FIG. 9.
[FIG. 12] FIG. 12 is an enlarged plan view showing the main configuration of a lower substrate in a display element of Embodiment 4 of the present invention when viewed from a non-display surface side.

### Description of the Invention

Hereinafter, preferred embodiments of a display element and an electric device of the present invention will be described with reference to the drawings. In the following description, the present invention is applied to an image display apparatus including a display portion that can display color images. The size and size ratio of each of the constituent members in the drawings do not exactly reflect those of the actual constituent members.

### [Embodiment 1]

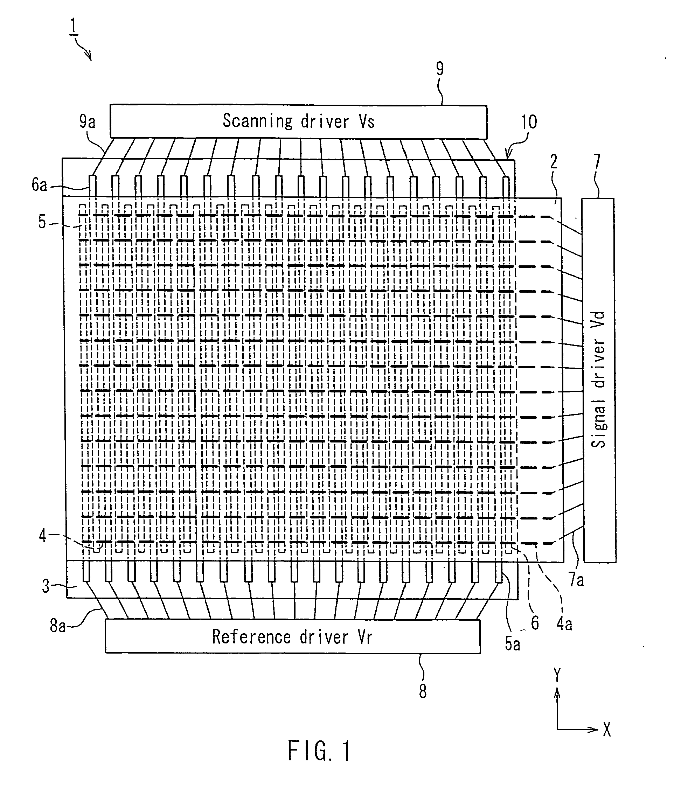

FIG. 1 is a plan view for explaining a display element and an image display apparatus of Embodiment 1 of the present invention. In FIG. 1, an image display apparatus 1 of this embodiment includes a display portion using a display element 10 of the present invention. The display portion has a rectangular display surface. The display element 10 includes an upper substrate 2 and a lower substrate 3 that are arranged to overlap each other in a direction perpendicular to the sheet of FIG. 1. The overlap between the upper substrate 2 and the lower substrate 3 forms an effective display region of the display surface (as will be described in detail later).

In the display element 10, a plurality of signal electrodes 4 are spaced at predetermined intervals and arranged in stripes in the X direction. Moreover, in the display element 10, a plurality of reference electrodes 5 and a plurality of scanning electrodes 6 are alternately arranged in stripes in the Y direction. The plurality of the signal electrodes 4 intersect with the plurality of the reference electrodes 5 and the plurality of the scanning electrodes 6, and a plurality of pixel regions are located at each of the intersections of the signal electrodes 4 and the scanning electrodes 6.

The signal electrodes 4, the reference electrodes 5, and the scanning electrodes 6 are configured so that voltages can be independently applied to these electrodes, and the voltages fall in a predetermined voltage range between a High voltage (referred to as "H voltage" in the following) that serves as a first voltage and a Low voltage (referred to as "L voltage" in the following) that serves as a second voltage (as will be described in detail later).

In the display element 10, the pixel regions are separated from one another by partitions and provided in accordance with a plurality of colors that enable full-color display to be shown on the display surface, as will be described in detail later. The display element 10 changes the display color on the display surface by moving a conductive liquid (as will be described later) for each of a plurality of pixels (display cells) arranged in a matrix using an electrowetting phenomenon.

One end of the signal electrodes 4, the reference electrodes 5, and the scanning electrodes 6 are extended to the outside of the effective display region of the display surface and form terminals 4a, 5a, and 6a, respectively.

A signal driver 7 is connected to the individual terminals 4a of the signal electrodes 4 via wires 7a. The signal driver 7 constitutes a signal voltage application portion and applies a signal voltage Vd to each of the signal electrodes 4 in accordance with information when the image display apparatus 1 displays the information including characters and images on the display surface.

A reference driver 8 is connected to the individual terminals 5a of the reference electrodes 5 via wires 8a. The reference driver 8 constitutes a reference voltage application portion and applies a reference voltage Vr to each of the reference electrodes 5 when the image display apparatus 1 displays the information including characters and images on the display surface.

A scanning driver 9 is connected to the individual terminals 6a of the scanning electrodes 6 via wires 9a. The scanning driver 9 constitutes a scanning voltage application portion and applies a scanning voltage Vs to each of the scanning electrodes 6 when the image display apparatus 1 displays the information including characters and images on the display surface.

The scanning driver 9 applies either a non-selected voltage or a selected voltage to each of the scanning electrodes 6 as the scanning voltage Vs. The non-selected voltage inhibits the movement of the conductive liquid and the selected voltage allows the conductive liquid to move in accordance with the signal voltage Vd. Moreover, the reference driver 8 is operated with reference to the operation of the scanning driver 9. The reference driver 8 applies either the non-selected voltage that inhibits the movement of the conductive liquid or the selected voltage that allows the conductive liquid to move in accordance with the signal voltage Vd to each of the reference electrodes 5 as the reference voltage Vr.

In the image display apparatus 1, the scanning driver 9 applies the selected voltage to each of the scanning electrodes 6 in sequence, e.g., from the left to the right of FIG. 1, and the reference driver 8 applies the selected voltage to each of the scanning electrodes 6 in sequence from the left to the right of FIG. 1 in synchronization with the operation of the scanning driver 9. Thus, the scanning driver 9 and the reference driver 8 perform their respective scanning operations for each line (as will be described in detail later).

The signal driver 7, the reference driver 8, and the scanning driver 9 include a direct-current power supply or an alternating-current power supply that supplies the signal voltage Vd, the reference voltage Vr, and the scanning voltage Vs, respectively.

The reference driver 8 switches the polarity of the reference voltage Vr at predetermined time intervals (e.g., 1 frame). Moreover, the scanning driver 9 switches the polarity of the scanning voltage Vs in accordance with the switching of the polarity of the reference voltage Vr. Thus, since the polarities of the reference voltage Vr and the scanning voltage Vs are switched at predetermined time intervals, the localization of charges in the reference electrodes 5 and the scanning electrodes 6 can be prevented, compared to the case where the voltages with the same polarity are always applied to the reference electrodes 5 and the scanning electrodes 6. Moreover, it is possible to prevent the adverse effects of a display failure (after-image phenomenon) and low reliability (a reduction in life) due to the localization of charges.

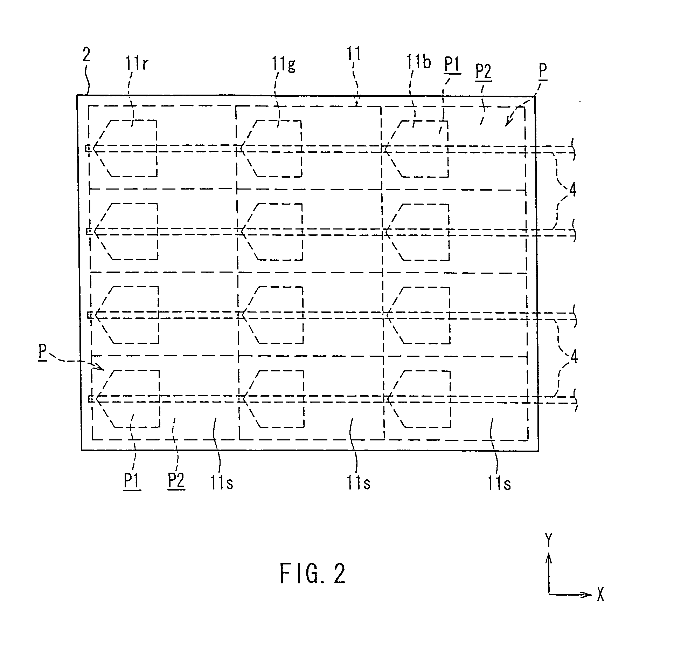

The pixel structure of the display element 10 will be described in detail with reference to FIGS. 2 to 4 as well as FIG. 1.

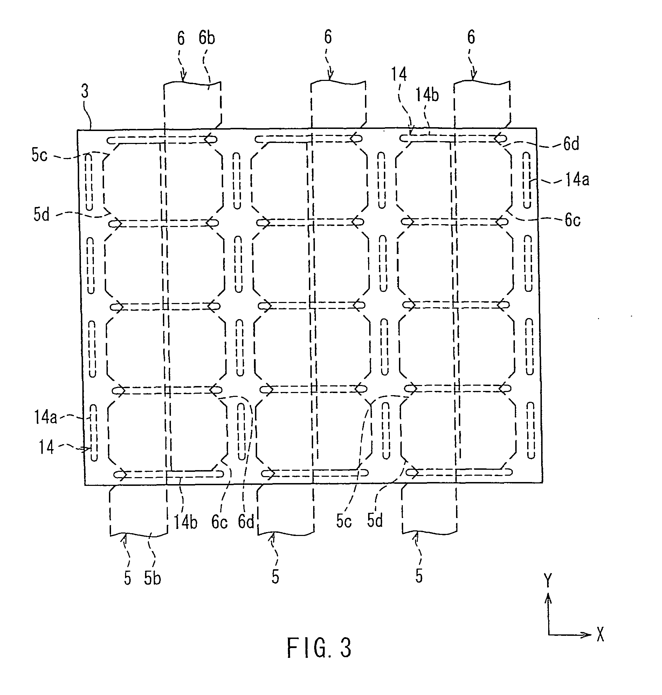

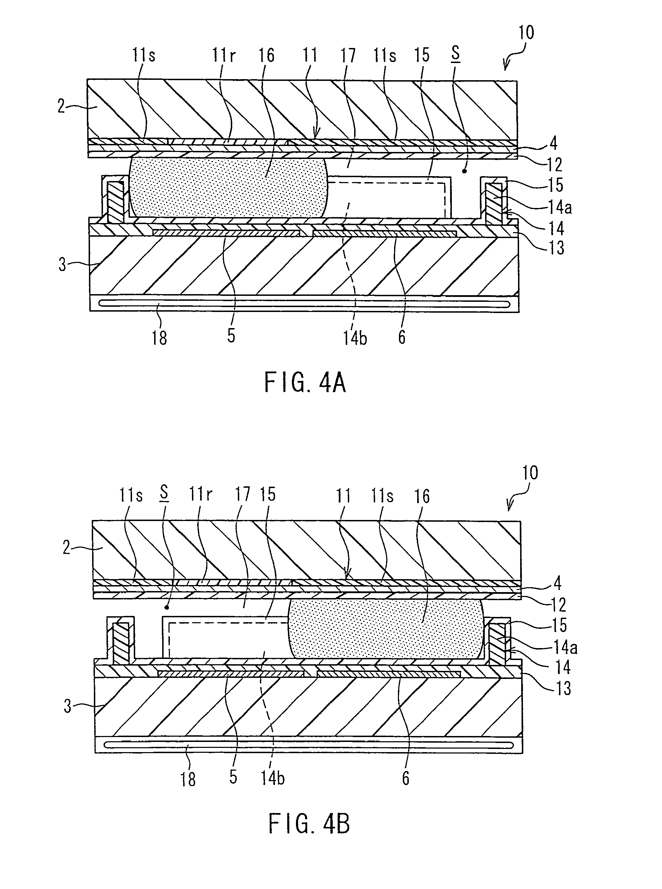

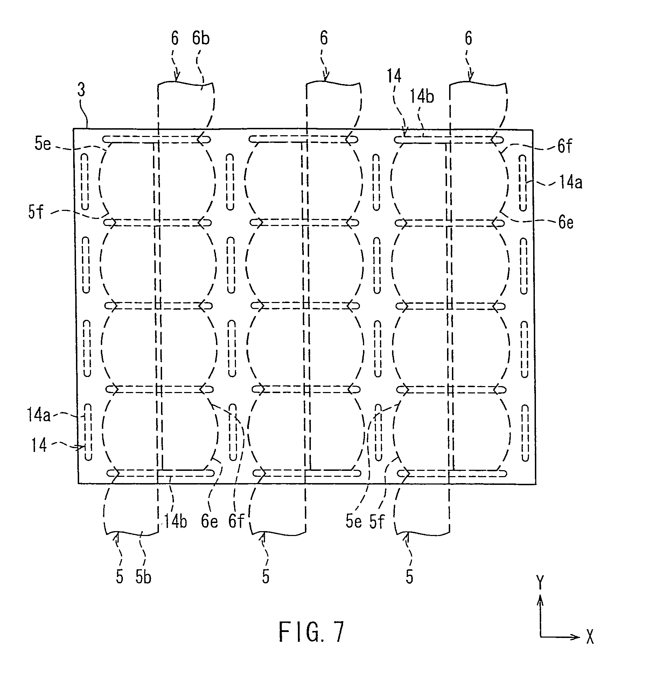

FIG. 2 is an enlarged plan view showing the main configuration of the upper substrate in FIG. 1 when viewed from the display surface side. FIG. 3 is an enlarged plan view showing the main configuration of the lower substrate in FIG. 1 when viewed from the non-display surface side. FIGS. 4A and 4B are cross-sectional views showing the main configuration of the display element in FIG.1 during non-CF color display and CF color display, respectively. For the sake of simplification, FIGS. 2 and 3 show twelve pixels placed at the upper left corner of the plurality of pixels on the display surface in FIG. 1 (the same is true for FIGS. 7, 9, 10 and 12 in the following).

In FIGS. 2 to 4, the display element 10 includes the upper substrate 2 that is provided on the display surface side and serves as a first substrate, and the lower substrate 3 that is provided on the back (i.e., the non-display surface side) of the upper substrate 2 and serves as a second substrate. In the display element 10, the upper substrate 2 and the lower substrate 3 are located at a predetermined distance away from each other, so that a predetermined display space S is formed between the upper substrate 2 and the lower substrate 3. The conductive liquid 16 and an insulating oil 17 that is not mixed with the conductive liquid 16 are sealed in the display space S and can be moved in the X direction (the lateral direction of FIG. 4). The conductive liquid 16 can be moved toward an effective display region P1 or a non-effective display region P2, as will be described later.

The conductive liquid 16 can be, e.g., an aqueous solution including water as a solvent and a predetermined electrolyte as a solute. Specifically, 1 mmol/L of potassium chloride (KCI) aqueous solution may be used as the conductive liquid 16. Moreover, the conductive liquid 16 is colored black, e.g., with a self-dispersible pigment.

The conductive liquid 16 is colored black and therefore functions as a shutter that allows or prevents light transmission. When the conductive liquid 16 is slidably moved in the display space S toward the reference electrode 5 (i.e., the effective display region P1) or the scanning electrode 6 (i.e., the non-effective display region P2), the display color of each pixel of the display element 10 is changed to black or any color of RBG, as will be described in detail later.

The oil 17 can be, e.g., a nonpolar, colorless, and transparent oil including one or more than one selected from a side-chain higher alcohol, a side-chain higher fatty acid, an alkane hydrocarbon, a silicone oil, and a matching oil. The oil 17 is shifted in the display space S as the conductive liquid 16 is slidably moved.

The upper substrate 2 can be, e.g., a transparent glass material such as a non-alkali glass substrate or a transparent sheet material such as a transparent synthetic resin (e.g., an acrylic resin). A color filter layer 11 and the signal electrodes 4 are formed in this order on the surface of the upper substrate 2 that faces the non-display surface side. Moreover, a hydrophobic film 12 is formed to cover the color filter layer 11 and the signal electrodes 4.

Like the upper substrate 2, the lower substrate 3 can be, e.g., a transparent glass material such as a non-alkali glass substrate or a transparent sheet material such as a transparent synthetic resin (e.g., an acrylic resin). The reference electrodes 5 and the scanning electrodes 6 are provided on the surface of the lower substrate 3 that faces the display surface side. Moreover, a dielectric layer 13 is formed to cover the reference electrodes 5 and the scanning electrodes 6. Ribs 14a and 14b are formed parallel to the Y direction and the X direction, respectively, on the surface of the dielectric layer 13 that faces the display surface side. In the lower substrate 3, a hydrophobic film 15 is further formed to cover the dielectric layer 13 and the ribs 14a, 14b.

A backlight 18 that emits, e.g., white illumination light is integrally attached to the back (i.e., the non-display surface side) of the lower substrate 3, thus providing a transmission type display element 10. The backlight 18 uses a light source such as a cold cathode fluorescent tube or a LED.

The color filter layer 11 includes red (R), green (G), and blue (B) color filters 11r, 11g, and 11b and a black matrix 11s serving as a light-shielding layer, thereby constituting the pixels of R, G, and B colors. In the color filter layer 11, as shown in FIG. 2, the R, G, and B color filters 11r, 11g, and 11b are successively arranged in columns in the X direction, and each column includes four color filters in the Y direction. Thus, a total of twelve pixels are arranged in three columns (the X direction) and four rows (the Y direction).

As shown in FIG. 2, in each of the pixel regions P of the display element 10, any of the R, G, and B color filters 11r, 11g, and 11b is provided in a portion corresponding to the effective display region P1 and the black matrix 11s is provided in a portion corresponding to the non-effective display region P2 of the pixel. In other words, with respect to the display space S, the non-effective display region (non-aperture region) P2 is defined by the black matrix (light-shielding layer) 11s and the effective display region P1 is defined by an aperture (i.e., any of the color filters 11r, 11g, and 11b formed in that black matrix 11s.

In the display element 10, the area of each of the color filters 11r, 11g, and 11b is the same as or slightly larger than that of the effective display region P1. On the other hand, the area of the black matrix 11s is the same as or slightly smaller than that of the non-effective display region P2. In FIG. 2, the boundary between two black matrixes 11s corresponding to the adjacent pixels is indicated by a dotted line to clarify the boundary between the adjacent pixels. Actually, however, no boundary is present between the black matrixes 11s of the color filter layer 11.

In the display element 10, as shown in FIG. 2, an aperture shape of the aperture (i.e., the shape of the effective display region P1) is a pentagon. For each of the reference electrodes 5 and the scanning electrodes 6, the aperture shape is determined based on the shape of the reference electrode 5 that is provided in the effective display region P1 (as will be described in detail later).

In the display element 10, the display space S is divided into the pixel regions P by the ribs 14a, 14b serving as the partitions as described above. Specifically, as shown in FIG. 3, the display space S of each pixel is partitioned by two opposing ribs 14a and two opposing ribs 14b. Moreover, in the display element 10, the ribs 14a, 14b prevent the conductive liquid 16 from flowing into the display space S of the adjacent pixel regions P. The ribs 14a, 14b are made of, e.g., a light-curing resin, and the height of the ribs 14a, 14b protruding from the dielectric layer 13 is determined so as to prevent the flow of the conductive liquid 16 between the adjacent pixels.

Other than the above description, e.g., frame-shaped ribs may be formed for each pixel on the lower substrate 3 instead of the ribs 14a, 14b. Moreover, the top of the frame-shaped ribs may be brought into close contact with the upper substrate 2 so that the adjacent pixel regions P are hermetically separated from one another. When the top of the ribs comes into close contact with the upper substrate 2, the signal electrodes 4 are provided to penetrate the ribs, and thus can be placed in the display space S.

The hydrophobic films 12, 15 are made of, e.g., a transparent synthetic resin, and preferably a fluoro polymer that functions as a hydrophilic layer for the conductive liquid 16 when a voltage is applied. This can significantly change the wettability (contact angle) between the conductive liquid 16 and each of the surfaces of the upper and lower substrates 2, 3 that face the display space S. Thus, the speed of movement of the conductive liquid 16 can be improved. The dielectric layer 13 can be, e.g., a transparent dielectric film containing parylene, a silicon nitride, a hafnium oxide, a zinc oxide, a titanium dioxide, or an aluminum oxide. A specific thickness of each of the hydrophobic films 12, 15 ranges from several tens of nanometers to several micrometers. A specific thickness of the dielectric layer 13 is several hundred nanometers. The hydrophobic film 12 does not electrically insulate the signal electrodes 4 from the conductive liquid 16, and therefore not interfere with the improvement in responsibility of the conductive liquid 16.

The reference electrodes 5 and the scanning electrodes 6 are made of, e.g., transparent electrode materials such as indium oxides (ITO), tin oxides (SnO₂), and zinc oxides (AZO, GZO, or IZO). The reference electrodes 5 and the scanning electrodes 6 are formed substantially in stripes on the lower substrate 3 by a known film forming method such as sputtering.

Specifically, as shown in FIG. 3, the end portion of each of the reference electrodes 5 that is opposite to a moving direction of the conductive liquid 16 relative to the reference electrode 5 is cut based on the shape of the conductive liquid 16 when no voltage is applied. Similarly, the end portion of each of the scanning electrodes 6 that is opposite to a moving direction of the conductive liquid 16 relative to the scanning electrode 6 is cut based on the shape of the conductive liquid 16 when no voltage is applied. In other words, as shown in FIG. 3, the reference electrode 5 includes a strip electrode body 5b and C-cut portions 5c, 5d formed in the end portion of the reference electrode 5 in each of the pixel regions P on the left side of FIG. 3. The C-cut portions 5c, 5d are provided in the end portion so that the end portion of the reference electrode 5 on the left side of FIG. 3, i.e., the end portion that is opposite to the moving direction of the conductive liquid 16 relative to the reference electrode 5 is in the form of a polygon. The cutting shape of each of the C-cut portions 5c, 5d is determined based on the shape of the conductive liquid 16 when no voltage is applied. Moreover, the shape of the reference electrode 5 in each of the pixel regions P is defined by a combination of the trapezoidal left end portion containing the C-cut portions 5c, 5d and the rectangular electrode body 5b.

As shown in FIG. 2, the aperture shape of the aperture (i.e., the shape of the effective display region P1) is determined based on the shape of the reference electrode 5 in each of the pixel regions P, and is formed as a pentagon having a vertex in the end portion on the left side of FIG. 2 (which is opposite to the moving direction of the conductive liquid 16 relative to the reference electrode 5).

Similarly, the scanning electrode 6 includes a strip electrode body 6b and C-cut portions 6c, 6d formed in the end portion of the scanning electrode 6 in each of the pixel regions P on the right side of FIG. 3. The C-cut portions 6c, 6d are provided in the end portion so that the end portion of the scanning electrode 6 on the right side of FIG. 3, i.e., the end portion that is opposite to the moving direction of the conductive liquid 16 relative to the scanning electrode 6 is in the form of a polygon. The cutting shape of each of the C-cut portions 6c, 6d is determined based on the shape of the conductive liquid 16 when no voltage is applied. Moreover, the shape of the scanning electrode 6 in each of the pixel regions P is defined by a combination of the trapezoidal left end portion containing the C-cut portions 6c, 6d and the rectangular electrode body 6b.

The signal electrodes 4 can be, e.g., linear wiring that is arranged parallel to the X direction. The signal electrodes 4 are placed on the color filter layer 11 so as to extend substantially through the center of each of the pixel regions P in the Y direction, and further to come into electrical contact with the conductive liquid 16 via the hydrophobic film 12. This can improve the responsibility of the conductive liquid 16 during a display operation.

A material that is electrochemically inert to the conductive liquid 16 is used for the signal electrodes 4. Therefore, even if the signal voltage Vd (e.g., 40 V) is applied to the signal electrodes 4, the electrochemical reaction between the signal electrodes 4 and the conductive liquid 16 can be minimized. Thus, it is possible to prevent electrolysis of the signal electrodes 4 and to improve the reliability and life of the display element 10.

Specifically, the signal electrodes 4 are made of, e.g., an electrode material including at least one of gold, silver, copper, platinum, and palladium. The signal electrodes 4 may be formed by fixing thin wires made of the above metal material on the color filter layer 11 or by mounting an ink material such as a conductive paste containing the metal material on the color filter layer 11 with screen printing or the like.

The shape of the signal electrode 4 is determined using the transmittance of the reference electrode 5 located below the effective display region P1 of the pixel. Specifically, based on a transmittance of about 75% to 95% of the reference electrode 5, the shape of the signal electrode 4 is determined so that the occupation area of the signal electrode 4 on the effective display region P1 is 30% or less, preferably 10% or less, and more preferably 5% or less of the area of the effective display region P1.

In each pixel of the display element 10 having the above configuration, as shown in PIG. 4A, when the conductive liquid 16 is held between the color filter 11r and the reference electrode 5, light from the backlight 18 is blocked by the conductive liquid 16, so that the black display (non-CF color display) is performed. On the other hand, as shown in FIG. 4B, when the conductive liquid 16 is held between the black matrix 11s and the scanning electrode 6, light from the backlight 18 is not blocked by the conductive liquid 16 and passes through the color filter 11r, so that the red display (CF color display) is performed.

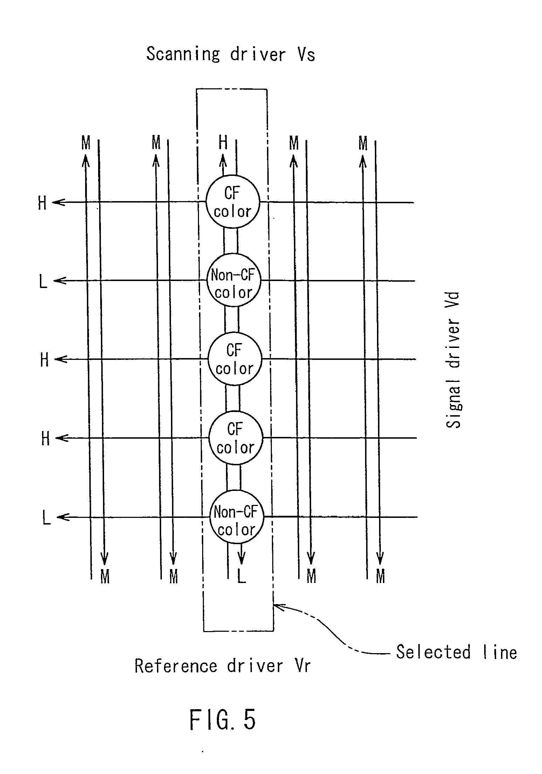

Hereinafter, a display operation of the image display apparatus 1 of this embodiment having the above configuration will be described in detail with reference to FIGS. 5 and 6 as well as FIGS. 1 to 4.

First, the basic operation of the image display apparatus 1 will be described with reference to FIG. 5.

FIG. 5 is a diagram for explaining an operation example of the image display apparatus 1.

In FIG. 5, the reference driver 8 and the scanning driver 9 apply the selected voltages (i.e., the reference voltage Vr and the scanning voltage Vs) to the reference electrodes 5 and the scanning electrodes 6 in sequence in a predetermined scanning direction, e.g., from the left to the right of FIG. 5, respectively. Specifically, the reference driver 8 and the scanning driver 9 perform their scanning operations to determine a selected line by applying the H voltage (first voltage) and the L voltage (second voltage) as the selected voltages to the reference electrodes 5 and the scanning electrodes 6 in sequence, respectively. In this selected line, the signal driver 7 applies the H or L voltage (i.e., the signal voltage Vd) to the corresponding signal electrodes 4 in accordance with the external image input signal. Thus, in each of the pixels of the selected line, the conductive liquid 16 is moved toward the effective display region P1 or the non-effective display region P2, and the display color on the display surface is changed accordingly.

On the other hand, the reference driver 8 and the scanning driver 9 apply the non-selected voltages (i.e., the reference voltage Vr and the scanning voltage Vs) to non-selected lines, namely to all the remaining reference electrodes 5 and scanning electrodes 6, respectively. Specifically, the reference driver 8 and the scanning driver 9 apply, e.g., intermediate voltages (Middle voltages, referred to as "M voltages" in the following) between the H voltage and the L voltage as the non-selected voltages to all the remaining reference electrodes 5 and scanning electrodes 6, respectively. Thus, in each of the pixels of the non-selected lines, the conductive liquid 16 stands still without unnecessary displacement from the effective display region P1 or the non-effective display region P2, and the display color on the display surface is unchanged.

Table 1 shows the combinations of the voltages applied to the reference electrodes 5, the scanning electrodes 6, and the signal electrodes 4 in the above display operation. As shown in Table 1, the behavior of the conductive liquid 16 and the display color on the display surface depend on the applied voltages. In Table 1, the H voltage, the L voltage, and the M voltage are abbreviated to "H", "L", and "M", respectively (the same is true for Table 2 in the following). The specific values of the H voltage, the L voltage, and the M voltage are, e.g., + 16 V, 0 V, and + 8 V, respectively.

**[TABLE 1]**

| | Reference electrode | Scanning electrode | Signal electrode | Behavior of conductive liquid and display color on display surface |
|---|---|---|---|---|
| Selected line | H | L | H | The conductive liquid is moved toward the scanning electrode. CF color display |
| | | | L | The conductive liquid is moved toward the reference electrode. Black display |
| Non-selected line | M | M | H | The conductive liquid is still (not moving). Black or CF color display |
| | | | L | |

### < Selected line operation >

In the selected line, e.g., when the H voltage is applied to the signal electrodes 4, there is no potential difference between the reference electrode 5 and the signal electrodes 4 because the H voltage is applied to both of these electrodes. On the other hand, a potential difference between the signal electrodes 4 and the scanning electrode 6 occurs because the L voltage is applied to the scanning electrode 6. Therefore, the conductive liquid 16 is moved in the display space S toward the scanning electrode 6 that makes a potential difference from the signal electrodes 4. Consequently, the conductive liquid 16 has been moved toward the non-effective display region P2, as shown in FIG. 4B, and allows the illumination light emitted from the backlight 18 to reach the color filter 11r by shifting the oil 17 toward the reference electrode 5. Thus, the display color on the display surface becomes red display (i.e., the CF color display) due to the color filter 11r. In the image display apparatus 1, when the CF color display is performed in all the three adjacent R, G, and B pixels as a result of the movement of the conductive liquid 16 toward the non-effective display region P2, the red, green, and blue colors of light from the corresponding R, G, and B pixels are mixed into white light, resulting in the white display.

In the selected line, when the L voltage is applied to the signal electrodes 4, a potential difference occurs between the reference electrode 5 and the signal electrodes 4, but not between the signal electrodes 4 and the scanning electrode 6. Therefore, the conductive liquid 16 is moved in the display space S toward the reference electrode 5 that makes a potential difference from the signal electrodes 4. Consequently, the conductive liquid 16 has been moved toward the effective display region P1, as shown in FIG. 4A, and prevents the illumination light emitted from the backlight 18 from reaching the color filter 11r. Thus, the display color on the display surface becomes black display (i.e., the non-CF color display) due to the presence of the conductive liquid 16.

### < Non-selected line operation >

In the non-selected lines, e.g., when the H voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4. Consequently, the display color is maintained without changing from the black display or the CF color display in the current state.

Similarly, in the non-selected lines, even when the L voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4.

As described above, in the non-selected lines, the conductive liquid 16 is not moved, but stands still and the display color on the display surface is unchanged regardless of whether the H or L voltage is applied to the signal electrodes 4.

On the other hand, in the selected line, the conductive liquid 16 can be moved in accordance with the voltage applied to the signal electrodes 4, as described above, and the display color on the display surface can be changed accordingly.

In the image display apparatus 1, depending on the combinations of the applied voltages in Table 1, the display color of each pixel on the selected line can be, e.g., the CF colors (red, green, or blue) produced by the color filters 11r, 11g, and 11b or the non-CF color (black) due to the conductive liquid 16 in accordance with the voltage applied to the signal electrodes 4 corresponding to the individual pixels, as shown in FIG. 5. When the reference driver 8 and the scanning driver 9 determine a selected line of the reference electrode 5 and the scanning electrode 6 by performing their scanning operations, e.g., from the left to the right of FIG. 5, the display colors of the pixels in the display portion of the image display apparatus 1 also are changed in sequence from the left to the right of FIG. 5. Therefore, if the reference driver 8 and the scanning driver 9 perform the scanning operations at a high speed, the display colors of the pixels in the display portion of the image display apparatus 1 also can be changed at a high speed. Moreover, by applying the signal voltage Vd to the signal electrodes 4 in synchronization with the scanning operation for the selected line, the image display apparatus 1 can display various information including dynamic images based on the external image input signal.

The combinations of the voltages applied to the reference electrodes 5, the scanning electrodes 6, and the signal electrodes 4 are not limited to Table 1, and may be as shown in Table 2.

**[TABLE 2]**

| | Reference electrode | Scanning electrode | Signal electrode | Behavior of conductive liquid and display color on display surface |
|---|---|---|---|---|
| Selected line | L | H | L | The conductive liquid is moved toward the scanning electrode. CF color display |
| | | | H | The conductive liquid is moved toward the reference electrode. Black display |
| Non-selected line | M | M | H | The conductive liquid is still (not moving). Black or CF color display |
| | | | L | |

The reference driver 8 and the scanning driver 9 perform their scanning operations to determine a selected line by applying the L voltage (second voltage) and the H voltage (first voltage) as the selected voltages to the reference electrodes 5 and the scanning electrodes 6 in sequence in a predetermined scanning direction, e.g., from the left to the right of FIG. 5, respectively. In this selected line, the signal driver 7 applies the H or L voltage (i.e., the signal voltage Vd) to the corresponding signal electrodes 4 in accordance with the external image input signal.

On the other hand, the reference driver 8 and the scanning driver 9 apply the M voltages as the non-selected voltages to the non-selected lines, namely to all the remaining reference electrodes 5 and scanning electrodes 6.

### < Selected line operation >

In the selected line, e.g., when the L voltage is applied to the signal electrodes 4, there is no potential difference between the reference electrode 5 and the signal electrodes 4 because the L voltage is applied to both of these electrodes. On the other hand, a potential difference between the signal electrodes 4 and the scanning electrode 6 occurs because the H voltage is applied to the scanning electrode 6. Therefore, the conductive liquid 16 is moved in the display space S toward the scanning electrode 6 that makes a potential difference from the signal electrodes 4. Consequently, the conductive liquid 16 has been moved toward the non-effective display region P2, as shown in FIG. 4B, and allows the illumination light emitted from the backlight 18 to reach the color filter 11r by shifting the oil 17 toward the reference electrode 5. Thus, the display color on the display surface becomes red display (i.e., the CF color display) due to the color filter 11r. Like Table 1, when the CF color display is performed in all the three adjacent R, G, and B pixels, the white display is performed.

In the selected line, when the H voltage is applied to the signal electrodes 4, a potential difference occurs between the reference electrode 5 and the signal electrodes 4, but not between the signal electrodes 4 and the scanning electrode 6. Therefore, the conductive liquid 16 is moved in the display space S toward the reference electrode 5 that makes a potential difference from the signal electrodes 4. Consequently, the conductive liquid 16 has been moved toward the effective display region P1, as shown in FIG. 4A, and prevents the illumination light emitted from the backlight 18 from reaching the color filter 11r. Thus, the display color on the display surface becomes black display (i.e., the non-CF color display) due to the presence of the conductive liquid 16.

### < Non-selected line operation >

In the non-selected lines, e.g., when the L voltage is applied to the signal electrodes 4, the conductive liquid 16 stands still in the same position, and the current display color is maintained. Since the M voltages are applied to both the reference electrodes 5 and the scanning electrodes 6, the potential difference between the reference electrodes 5 and the signal electrodes 4 is the same as that between the scanning electrodes 6 and the signal electrodes 4. Consequently, the display color is maintained without changing from the black display or the CF color display in the current state.

Similarly, in the non-selected lines, even when the H voltage is applied to the signal electrodes 4, the conductive liquid 16 stands still in the same position, and the current display color is maintained. Since the M voltages are applied to both the reference electrodes 5 and the scanning electrodes 6, the potential deference between the reference electrodes 5 and the signal electrodes 4 is the same as that between the scanning electrodes 6 and the signal electrodes 4.

In the non-selected lines, as shown in Table 2, similarly to Table 1, the conductive liquid 16 is not moved, but stands still and the display color on the display surface is unchanged regardless of whether the H or L voltage is applied to the signal electrodes 4.

On the other hand, in the selected line, the conductive liquid 16 can be moved in accordance with the voltage applied to the signal electrodes 4, as described above, and the display color on the display surface can be changed accordingly.

In the image display apparatus 1 of this embodiment, other than the combinations of the applied voltages shown in Tables 1 and 2, the voltage applied to the signal electrodes 4 not only has two values of the H voltage and the L voltage, but also may be changed between the H voltage and the L voltage in accordance with information to be displayed on the display surface. That is, the image display apparatus 1 can perform the gradation display by controlling the signal voltage Vd. Thus, the display element 10 can achieve excellent display performance.

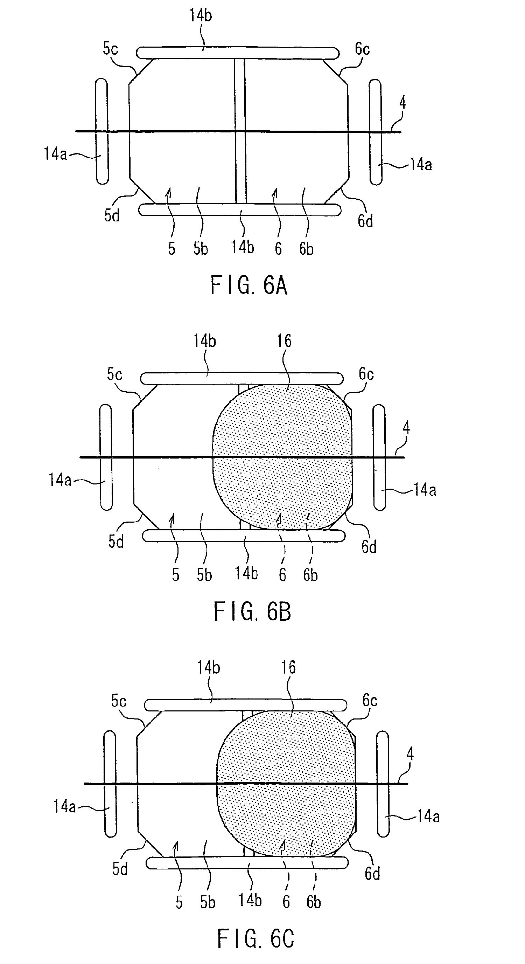

Referring to FIG. 6, the following is a detailed explanation of an operation example in both cases where voltages are applied and where no voltage is applied to the signal electrodes 4, the reference electrodes 5, and the scanning electrodes 6 in the display element 10 of this embodiment.

FIG. 6 is a diagram for explaining the operation example of the display element in each of the pixel regions. FIG. 6A is a diagram for explaining an electrode configuration in the pixel region. FIG. 6B is a diagram for explaining a state of the conductive liquid when voltages are applied to the electrodes. FIG. 6C is a diagram for explaining a state of the conductive liquid when no voltage is applied to the electrodes.

As shown in FIG. 6A, the reference electrode 5 has the C-cut portions 5c, 5d in the end portion that is opposite to the moving direction of the conductive liquid 16 relative to the reference electrode 5 so that the end portion is in the form of a polygon. Similarly, the scanning electrode 6 has the C-cut portions 6c, 6d in the end portion that is opposite to the moving direction of the conductive liquid 16 relative to the scanning electrode 6 so that the end portion is in the form of a polygon. When the voltages are applied to the signal electrode 4, the reference electrode 5, and the scanning electrode 6, e.g., to display a static image, the conductive liquid 16 is moved toward the scanning electrode 6, as shown in FIG. 6B. In this case, since the scanning electrode 6 has the C-cut portions 6c, 6d in the end portion that is opposite to the moving direction of the conductive liquid 16 relative to the scanning electrode 6, the conductive liquid 16 is shaped in conformity with the shape of the scanning electrode 6, as shown in FIG. 6B.

Moreover, when the application of the voltages to the signal electrode 4, the reference electrode 5, and the scanning electrode 6 is stopped, e.g., to display the static image continuously, there is no action of the electrowetting phenomenon on the conductive liquid 16 located on the reference electrode 5 or the scanning electrode 6. Consequently, the interfacial tension between the conductive liquid 16 and the lower substrate 3 is increased. However, as shown in FIG. 6C, the scanning electrode 6 has the C-cut portions 6c, 6d based on the shape of the conductive liquid 16 when no voltage is applied, and therefore even if the interfacial tension between the conductive liquid 16 and the lower substrate 3 is increased, the shape of the conductive liquid 16 can be the same as that shown in FIG. 6B. Thus, it is possible to suppress an unnecessary movement of the conductive liquid 16 to the left of FIG. 6C (i.e., the effective display region P1 side) due to a change in the interfacial tension.

In the display element 10 of this embodiment having the above configuration, the reference electrode 5 has the C-cut portions 5c, 5d in the end portion that is opposite to the moving direction of the conductive liquid 16 relative to the reference electrode 5 so that the end portion is in the form of a polygon, and the scanning electrode 6 has the C-cut portions 6c, 6d in the end portion that is opposite to the moving direction of the conductive liquid 16 relative to the scanning electrode 6 so that the end portion is in the form of a polygon. Thus, in the display element 10 of this embodiment, the conductive liquid 16 can have the same shape regardless of the presence or absence of the application of the voltages to the reference electrode 5 and the scanning electrode 6 because of the C-cut portions 5c, 5d of the reference electrode 5 or the C-cut portions 6c, 6d of the scanning electrode 6, as shown in FIG. 6. Consequently, in the display element 10 of this embodiment, unlike the conventional example, the shape of the conductive liquid 16 that is subjected to the action of the electrowetting phenomenon can be the same as the shape of the conductive liquid 16 that is not subjected to the action of the electrowetting phenomenon. Therefore, unlike the conventional example, the display element 10 of this embodiment can suppress an unnecessary movement of the conductive liquid 16 and have excellent display quality even if the power consumption is reduced.

In the image display apparatus (electric device) 1 of this embodiment, the display element 10 that can suppress an unnecessary movement of the conductive liquid 16 and have excellent display quality even if the power consumption is reduced is used in the display portion. Therefore, a high-performance pixel display apparatus (electric device) 1 including the display portion with excellent display quality can be easily provided.

In the display element 10 of this embodiment, the signal driver (signal voltage application portion) 7, the reference driver (reference voltage application portion) 8, and the scanning driver (scanning voltage application portion) 9 apply the signal voltage Vd, the reference voltage Vr, and the scanning voltage Vs to the signal electrodes 4, the reference electrodes 5, and the scanning electrodes 6, respectively. Thus, in this embodiment, a matrix-driven display element 10 with excellent display quality can be easily provided, and the display color in each of the pixel regions can be appropriately changed.

In the above description, the application of the voltages to all the signal electrodes 4, the reference electrodes 5, and the scanning electrodes 6 is performed or stopped. That is, the display element 10 of this embodiment is used to display the static image continuously. However, the display 10 of this embodiment is not limited thereto. For example, as shown in Tables 1 and 2, even the pixels of the non-selected lines determined by the above scanning operations can have the effects shown in FIGS. 6B and 6C.

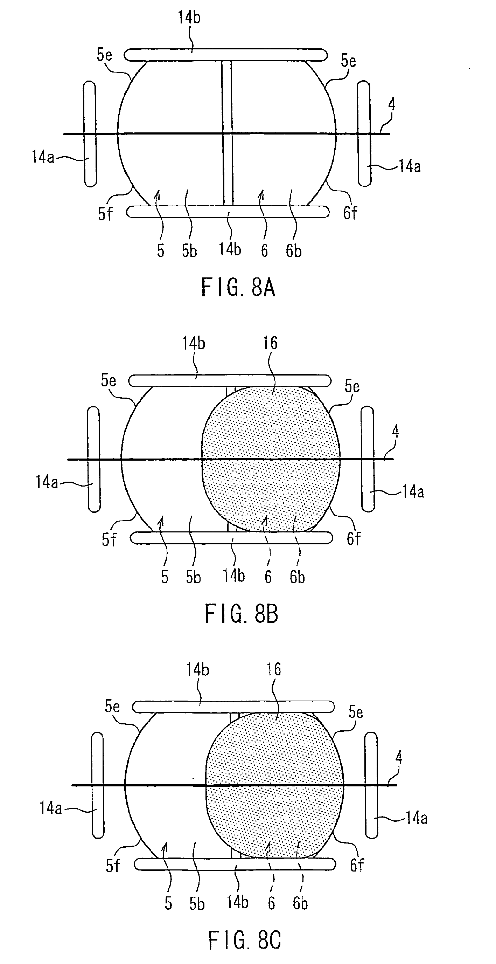

Specifically, in the display element 10 of this embodiment, even if the M voltages are applied to the reference electrodes 5 and the scanning electrodes 6 and the H voltage or the L voltage is applied to the signal electrodes 4, the shape of the conductive liquid 16 can be maintained in the same state as that shown in FIG. 6C, similarly to the state shown in FIG. 6B. Thus, even in the non-selected lines, the display element 10 of this embodiment can suppress an unnecessary movement of the conductive liquid 16 (the same is true for FIG. 8 in the following).

### [Embodiment 2]

FIG. 7 is an enlarged plan view showing the main configuration of a lower substrate in a display element of Embodiment 2 of the present invention when viewed from a non-display surface side. In FIG. 7, this embodiment mainly differs from Embodiment 1 in that the reference electrode has R-cut portions instead of the C-cut portions in the end portion that is opposite to the moving direction of the conductive liquid relative to the reference electrode so that the end portion is in the form of a circular arc, and the scanning electrode has R-cut portions instead of the C-cut portions in the end portion that is opposite to the moving direction of the conductive liquid relative to the scanning electrode so that the end portion is in the form of a circular arc. The same components as those of Embodiment 1 are denoted by the same reference numerals, and the explanation will not be repeated.

As shown in FIG. 7, in the display element 10 of this embodiment, each of the reference electrodes 5 has the R-cut portions 5e, 5f in the end portion that is opposite to the moving direction of the conductive liquid 16 relative to the reference electrode 5 so that the end portion is in the form of a circular arc, based on the shape of the conductive liquid 16 when no voltage is applied. Similarly, each of the scanning electrodes 6 has the R-cut portions 6e, 6f in the end portion that is opposite to the moving direction of the conductive liquid 16 relative to the scanning electrode 6 so that the end portion is in the form of a circular arc, based on the shape of the conductive liquid 16 when no voltage is applied. Specifically, as shown in FIG. 7, the reference electrode 5 includes the strip electrode body 5b and the R-cut portions 5e, 5f formed in the end portion of the reference electrode 5 in each of the pixel regions P on the left side of FIG. 7. The R-cut portions 5e, 5f are provided in the end portion so that the end portion of the reference electrode 5 on the left side of FIG. 7, i.e., the end portion that is opposite to the moving direction of the conductive liquid 16 relative to the reference electrode 5 is in the form of a circular arc. The cutting shape of each of the R-cut portions 5e, 5f is determined based on the shape of the conductive liquid 16 when no voltage is applied. Moreover, the shape of the reference electrode 5 in each of the pixel regions P is defined by a combination of the semicircular left end portion containing the R-cut portions 5e, 5f and the rectangular electrode body 5b.

Similarly, the scanning electrode 6 includes the strip electrode body 6b and the R-cut portions 6e, 6f formed in the end portion of the scanning electrode 6 in each of the pixel regions P on the right side of FIG. 7. The R-cut portions 6e, 6f are provided in the end portion so that the end portion of the scanning electrode 6 on the right side of FIG. 7, i.e., the end portion that is opposite to the moving direction of the conductive liquid 16 relative to the scanning electrode 6 is in the form of a circular arc. The cutting shape of each of the R-cut portions 6e, 6f is determined based on the shape of the conductive liquid 16 when no voltage is applied. Moreover, the shape of the scanning electrode 6 in each of the pixel regions P is defined by a combination of the semicircular left end portion containing the R-cut portions 6e, 6f and the rectangular electrode body 6b.

Referring to FIG. 8, the following is a detailed explanation of an operation example in both cases where voltages are applied and where no voltage is applied to the signal electrodes 4, the reference electrodes 5, and the scanning electrodes 6 in the display element 10 of this embodiment.

FIG. 8 is a diagram for explaining the operation example of the display element shown in FIG. 7 in each of the pixel regions. FIG. 8A is a diagram for explaining an electrode configuration in the pixel region. FIG. 8B is a diagram for explaining a state of the conductive liquid when voltages are applied to the electrodes. FIG. 8C is a diagram for explaining a state of the conductive liquid when no voltage is applied to the electrodes.

As shown in FIG. 8A, the reference electrode 5 has the R-cut portions 5e, 5f in the end portion that is opposite to the moving direction of the conductive liquid 16 relative to the reference electrode 5 so that the end portion is in the form of a circular arc. Similarly, the scanning electrode 6 has the R-cut portions 6e, 6f in the end portion that is opposite to the moving direction of the conductive liquid 16 relative to the scanning electrode 6 so that the end portion is in the form of a circular arc. When the voltages are applied to the signal electrode 4, the reference electrode 5, and the scanning electrode 6, e.g., to display a static image, the conductive liquid 16 is moved toward the scanning electrode 6, as shown in FIG. 8B. In this case, since the scanning electrode 6 has the R-cut portions 6e, 6f in the end portion that is opposite to the moving direction of the conductive liquid 16 relative to the scanning electrode 6, the conductive liquid 16 is shaped in conformity with the shape of the scanning electrode 6, as shown in FIG. 8B.

Moreover, when the application of the voltages to the signal electrode 4, the reference electrode 5, and the scanning electrode 6 is stopped, e.g., to display the static image continuously, there is no action of the electrowetting phenomenon on the conductive liquid 16 located on the reference electrode 5 or the scanning electrode 6. Consequently, the interfacial tension between the conductive liquid 16 and the lower substrate 3 is increased. However, as shown in FIG. 8C, the scanning electrode 6 has the R-cut portions 6e, 6f based on the shape of the conductive liquid 16 when no voltage is applied, and therefore even if the interfacial tension between the conductive liquid 16 and the lower substrate 3 is increased, the shape of the conductive liquid 16 can be the same as that shown in FIG. 8B. Thus, it is possible to suppress an unnecessary movement of the conductive liquid 16 to the left of FIG. 8C (i.e., the effective display region P1 side) due to a change in the interfacial tension.

With the above configuration, this embodiment can have effects comparable to those of Embodiment 1. In this embodiment, the conductive liquid 16 can have the same shape regardless of the presence or absence of the application of the voltages to the reference electrode 5 and the scanning electrode 6 because of the R-cut portions 5e, 5f of the reference electrode 5 and the R-cut portions 6e, 6f of the scanning electrode 6, as shown in FIG. 8.

Moreover, the display element 10 of this embodiment can suppress an unnecessary movement of the conductive liquid 16 more effectively than the display element of Embodiment 1. As described above, when no voltage is applied to the reference electrode 5 and the scanning electrode 6, the conductive liquid 16 is changed to a spherical shape due to a change in the interfacial tension. Therefore, compared to the C-cut portions. 5c, 5d, 6c, and 6d in Embodiment 1, the R-cut portions 5e, 5f, 6e, and 6f conform more easily to the shape of the conductive liquid 16 under a large interfacial tension, so that the unnecessary movement of the conductive liquid 16 can be suppressed more effectively

### [Embodiment 3]

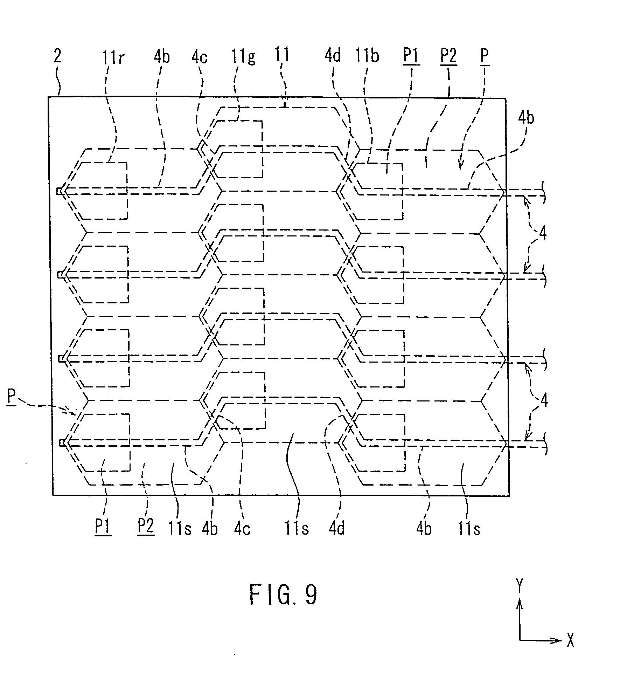

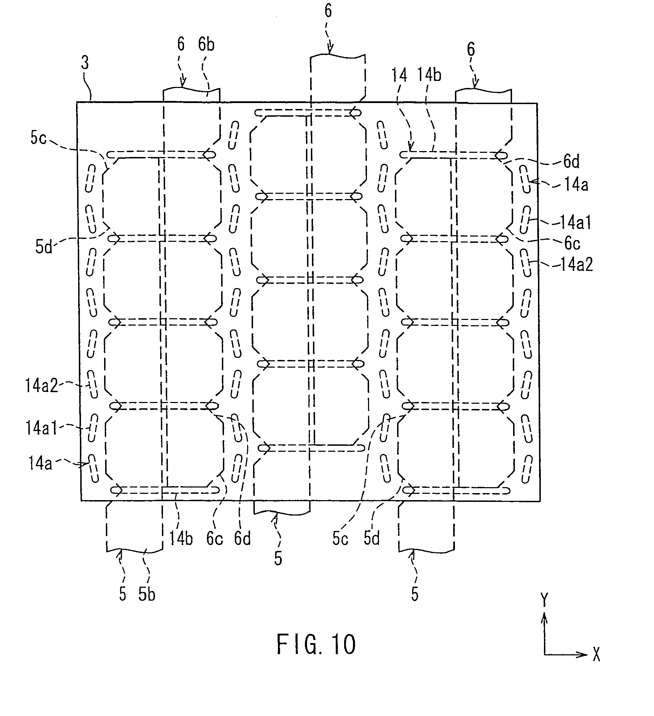

FIG. 9 is an enlarged plan view showing the main configuration of an upper substrate in a display element of Embodiment 3 of the present invention when viewed from a display surface side. FIG. 10 is an enlarged plan view showing the main configuration of a lower substrate in the display element of Embodiment 3 of the present invention when viewed from a non-display surface side. In FIGS. 9 and 10, this embodiment mainly differs from Embodiment 1 in that a plurality of pixel regions are arranged in a honeycomb array on the display surface side. The same components as those of Embodiment 1 are denoted by the same reference numerals, and the explanation will not be repeated.

As shown in FIG. 9, in the display element 10 of this embodiment, a plurality of pixel regions P are arranged in a honeycomb array on the display surface side. Specifically in the display element 10 of this embodiment, the overall shape of each of the pixel regions P is a hexagon. Moreover, as shown in FIG. 9, there are four pixel regions P in the center of FIG. 9, and one end portion of each of the pixel regions P on the left side of FIG. 9 and one end portion of each of the pixel regions P on the right side of FIG. 9 are closely fitted into the spaces between the two adjacent pixel regions P in the center.

In other words, in the display element 10 of this embodiment, unlike the display element of Embodiment 1, both end portions of each of the pixel regions P in the lateral direction of FIG. 9 are in the form of a triangle, and the pixel regions P are arranged so that the triangular end portions come into close contact with each other. In the display element 10 of this embodiment, two adjacent pixel regions P in the X direction are arranged without leaving any gap between them, and the triangular end portions of these pixel regions P are aligned in the Y direction. By forming the shape of the pixel regions P as described above, the ratio of the effective display region P1 to the pixel region P can be increased more easily in the display element 10 of this embodiment than in the display element of Embodiment 1 (as will be described in detail later).

In the display element 10 of this embodiment, as shown FIG. 9, the signal electrodes 4 are configured to have a shape corresponding to the honeycomb array of the pixel regions P. Specifically, each of the signal electrodes 4 includes a linear portion 4b that passes through the center of each of the pixel regions P in the Y direction, and inclined portions 4c, 4d that are provided between two adjacent pixel regions P.

In the display element 10 of this embodiment, as shown in FIG. 10, the ribs 14a are configured to have a shape corresponding to the honeycomb array of the pixel regions P. Specifically, each of the ribs 14a includes a rib 14a1 and a rib 14a2 that correspond to two oblique sides of the triangular end portion, respectively.

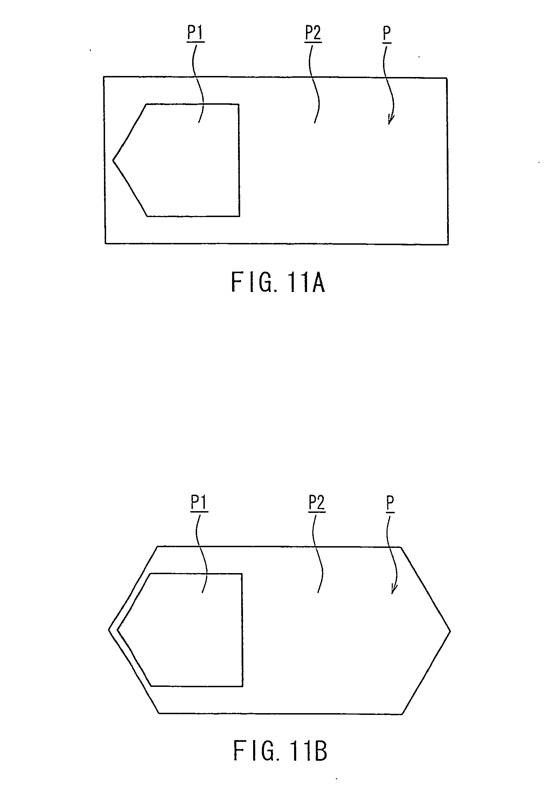

Hereinafter, the effect of the honeycomb array in the display element 10 of this embodiment will be described in detail with reference to FIG. 11.

FIG. 11 is a diagram for explaining the effect of the honeycomb array in the display element shown in FIG. 9. FIG.11A is a plan view of the pixel region of the display element shown in FIG. 2. FIG.11B is a plan view of the pixel region of the display element shown in FIG. 9.

As shown in FIG. 11A, the overall shape of each of the pixel regions P in Embodiment 1 is a rectangle. On the other hand, as shown in FIG. 11B, the overall shape of each of the pixel regions P in this embodiment is a hexagon. In this embodiment, since a plurality of pixel regions P are arranged in a honeycomb array as shown in FIG. 9, the overall shape of each of the pixel regions P is a hexagon with its end portions in the lateral direction of FIG. 11B being in the form of a triangle.

Moreover, the areas of the effective display regions P1 of the pixel regions P in FIG. 11A and FIG. 11B are the same. On the other hand, the total area of each of the pixel regions P is smaller in this embodiment than in Embodiment 1. In this embodiment, the pixel region P has the triangular end portions in the lateral direction, and therefore the area of the non-effective display region P2 and thus the total area of the pixel region P are made smaller than those in Embodiment 1. Consequently, compared to Embodiment 1, this embodiment can easily increase the ratio of the effective display region P1 to the pixel region P. In other words, this embodiment can easily increase the ratio of each of the color filters (apertures) 11r, 11g, and 11b to the pixel region P, and thus can easily improve the aperture ratio in each pixel.

With the above configuration, this embodiment can have effects comparable to those of Embodiment 1. Moreover, as shown in FIG. 11, compared to Embodiment 1, this embodiment can easily increase the ratio of the effective display region P1 to the pixel region P.

### [Embodiment 4]

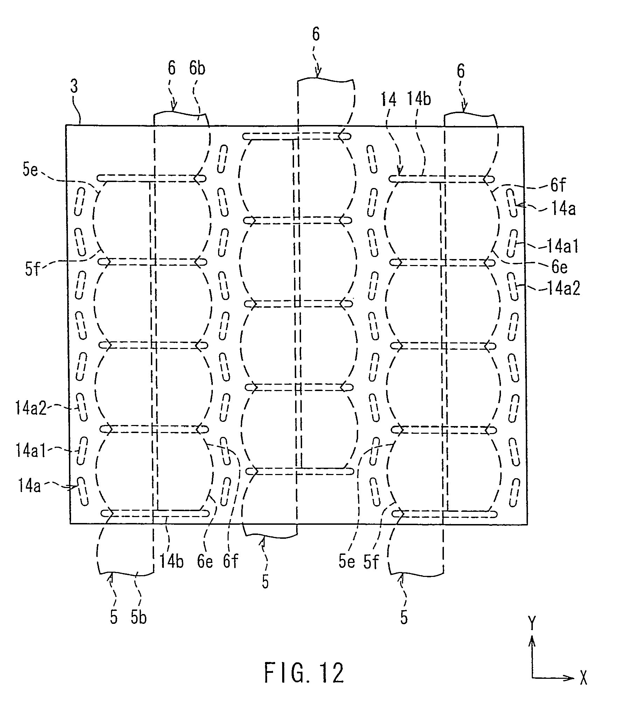

FIG. 12 is an enlarged plan view showing the main configuration of a lower substrate in a display element of Embodiment 4 of the present invention when viewed from a non-display surface side. In FIG. 12, this embodiment mainly differs from Embodiment 3 in that the reference electrode has R-cut portions instead of the C-cut portions in the end portion that is opposite to the moving direction of the conductive liquid relative to the reference electrode so that the end portion is in the form of a circular arc, and the scanning electrode has R-cut portions instead of the C-cut portions in the end portion that is opposite to the moving direction of the conductive liquid relative to the scanning electrode so that the end portion is in the form of a circular arc. The same components as those of Embodiment 3 are denoted by the same reference numerals, and the explanation will not be repeated.

As shown in FIG. 12, in the display element 10 of this embodiment, each of the reference electrodes 5 has the R-cut portions 5e, 5f in the end portion that is opposite to the moving direction of the conductive liquid 16 relative to the reference electrode 5 so that the end portion is in the form of a circular arc. Similarly, each of the scanning electrodes 6 has the R-cut portions 6e, 6f in the end portion that is opposite to the moving direction of the conductive liquid 16 relative to the scanning electrode 6 so that the end portion is in the form of a circular arc. Like Embodiment 2, the cutting shape of each of the R-cut portions 5e, 5f, 6e, and 6f is determined based on the shape of the conductive liquid 16 when no voltage is applied.

With the above configuration, this embodiment can have effects comparable to those of Embodiment 3. In this embodiment, similarly to Embodiment 2, the conductive liquid 16 can have the same shape regardless of the presence or absence of the application of the voltages to the reference electrode 5 and the scanning electrode 6 because of the R-cut portions 5e, 5f of the reference electrode 5 and the R-cut portions 6e, 6f of the scanning electrode 6.

Moreover, similarly to Embodiment 2, the display element 10 of this embodiment can suppress an unnecessary movement of the conductive liquid 16 more effectively than the display element of Embodiment 3.

It should be noted that the above embodiments are all illustrative and not restrictive. The technological scope of the present invention is defined by the appended claims, and all changes that come within the range of equivalency of the claims are intended to be embraced therein.

For example, in the above description, the present invention is applied to an image display apparatus including a display portion that can display color images. However, the present invention is not limited thereto, as long as it is applied to an electric device with a display portion that displays the information including characters and images. For example, the present invention is suitable for various electric devicees with display portions such as a personal digital assistant such as an electronic organizer, a display apparatus for a personal computer or television, and an electronic paper.

In the above description, the electrowetting-type display element is used, in which the conductive liquid is moved in accordance with the application of an electric field to the conductive liquid. However, the display element of the present invention is not limited thereto, as long as it is an electric-field-induced display element that can change the display color on the display surface by moving the conductive liquid in the display space with the use of an external electric field. For example, the present invention can be applied to other types of electric-field-induced display elements such as an electroosmotic type, an electrophoretic type, and a dielectrophoretic type.

As described in each of the above embodiments, the electrowetting-type display element is preferred because the conductive liquid can be moved at a high speed and a low drive voltage. Moreover, since three different electrodes are used to move the conductive liquid slidably, the electrowetting-type display element can achieve both a high switching speed of the display color on the display surface and electric power saving more easily than the display element in which the shape of the conductive liquid is changed. In the electrowetting-type display element, the display color is changed with the movement of the conductive liquid. Therefore, unlike a liquid crystal display apparatus or the like, there is no viewing angle dependence. Moreover, since a switching device does not need to be provided for each pixel, a high-performance matrix-driven display element having a simple structure can be achieved at a low cost. Further, the electrowetting-type display element does not use a birefringent material such as a liquid crystal layer. Therefore, it is possible to easily provide a high brightness display element with excellent utilization efficiency of light from the backlight or ambient light used for information display.

In the above description of each of Embodiments 1 and 3, the reference electrode and the scanning electrode have the C-cut portions. In the above description of each of Embodiments 2 and 4, the reference electrode and the scanning electrode have the R-cut portions. However, the display element of the present invention is not limited thereto, as long as the end portion of the reference electrode that is opposite to the moving direction of the conductive liquid relative to the reference electrode is cut, and the end portion of the scanning electrode that is opposite to the moving direction of the conductive liquid relative to the scanning electrode is cut.

As described in each of the above embodiments, it is preferable that the end portion of the reference electrode that is opposite to the moving direction of the conductive liquid relative to the reference electrode and the end portion of the scanning electrode that is opposite to the moving direction of the conductive liquid relative to the scanning electrode are cut based on the shape of the conductive liquid when no voltage is applied. This is because the conductive liquid can have the same shape more reliably regardless of the presence or absence of the application of the voltages to the reference electrode and the scanning electrode, and thus a movement of the conductive liquid can be suppressed more reliably.

The above description refers to the transmission type display element including a backlight. However, the present invention is not limited thereto, and may be applied to a reflection type display element including a light reflection portion such as a diffuse reflection plate, a semi-transmission type display element including the light reflection portion along with a backlight, or the like.

In the above description, the signal electrodes are provided on the upper substrate (first substrate) and the reference electrodes and the scanning electrodes are provided on the lower substrate (second substrate). However, the present invention is not limited thereto, and may have a configuration in which the signal electrodes are placed in the display space so as to come into contact with the conductive liquid, and the reference electrodes and the scanning electrodes are provided on one of the first substrate and the second substrate so as to be electrically insulated from the conductive liquid and each other. Specifically, e.g., the signal electrodes may be provided on the second substrate or on the ribs, and the reference electrodes and the scanning electrodes may be provided on the first substrate.

In the above description, the reference electrodes and the scanning electrodes are located on the effective display region side and the non-effective display region side, respectively. However, the present invention is not limited thereto, and the reference electrodes and the scanning electrodes may be located on the non-effective display region side and the effective display region side, respectively.

In the above description, the reference electrodes and the scanning electrodes are provided on the surface of the lower substrate (second substrate) that faces the display surface side. However, the present invention is not limited thereto, and can use the reference electrodes and the scanning electrodes that are buried in the second substrate made of an insulating material. In this case, the second substrate also can serve as a dielectric layer, which can eliminate the formation of the dielectric layer. Moreover, the signal electrodes may be directly provided on the first and second substrates serving as dielectric layers, and thus may be placed in the display space.

In the above description, the reference electrodes and the scanning electrodes are made of transparent electrode materials. However, the present invention is not limited thereto, as long as either one of the reference electrodes and the scanning electrodes, which are arranged to face the effective display regions of the pixels, are made of the transparent electrode materials. The other electrodes that do not face the effective display regions can be made of opaque electrode materials such as aluminum, silver, chromium, and other metals.

In the above description, the reference electrodes and the scanning electrodes are in the form of stripes. However, the shapes of the reference electrodes and the scanning electrodes of the present invention are not limited thereto. For example, the reflection type display element may use linear or mesh electrodes that are not likely to cause a light loss, since the utilization efficiency of light used for information display is lower in the reflection type display element than in the transmission type display element.

In the above description, the signal electrodes are linear wiring. However, the signal electrodes of the present invention are not limited thereto, and can be wiring with other shapes such as mesh wiring.

As described in each of the above embodiments, it is preferable that the shape of the signal electrodes is determined using the transmittance of the reference electrodes and the scanning electrodes that are transparent electrodes. This is because even if the signal electrodes are made of an opaque material, shadows of the signal electrodes can be prevented from appearing on the display surface, and thus a decrease in display quality can be suppressed. The use of the linear wiring is more preferred because the decrease in display quality can be reliably suppressed.

In the above description, the conductive liquid is a potassium chloride aqueous solution, and the signal electrodes include at least one of gold, silver, copper, platinum, and palladium. However, the present invention is not limited thereto, as long as a material that is electrochemically inert to the conductive liquid is used for the signal electrodes that are placed in the display space and come into contact with the conductive liquid. Specifically, the conductive liquid can be, e.g., a material including an electrolyte such as a zinc chloride, potassium hydroxide, sodium hydroxide, alkali metal hydroxide, zinc oxide, sodium chloride, lithium salt, phosphoric acid, alkali metal carbonate, or ceramics with oxygen ion conductivity The solvent can be, e.g., an organic solvent such as alcohol, acetone, formamide, or ethylene glycol other than water. The conductive liquid of the present invention also can be an ionic liquid (room temperature molten salt) including pyridine-, alicyclic amine-, or aliphatic amine-based cations and fluorine anions such as fluoride ions or triflate.

As described in each of the above embodiments, the aqueous solution in which a predetermined electrolyte is dissolved is preferred for the conductive liquid because the display element can have excellent handling properties and also be easily produced.

The signal electrodes of the present invention may be in the passive state including an electrode body composed of a conductive metal such as aluminum, nickel, iron, cobalt, chromium, titanium, tantalum, niobium, or an alloy thereof and an oxide film disposed to cover the surface of the electrode body

As described in each of the above embodiments, the signal electrodes including at least one of gold, silver, copper, platinum, and palladium are preferred because these metals have a low ionization tendency and make it possible not only to simplify the signal electrodes, but also to reliably prevent an electrochemical reaction between the signal electrodes and the conductive liquid. Thus, the display element can easily prevent a reduction in the reliability and have a long life. Moreover, with the use of the metals having a low ionization tendency, the interfacial tension at the interface between the signal electrodes and the conductive liquid can be relatively small. Therefore, when the conductive liquid is not moved, it can be easily held in a stable state at the fixed position.

In the above description, the nonpolar oil is used. However, the present invention is not limited thereto, as long as an insulating fluid that is not mixed with the conductive liquid is used. For example, air may be used instead of the oil. Moreover, silicone oil or an aliphatic hydrocarbon also can be used as the oil.

As described in each of the above embodiments, the nonpolar oil that is not compatible with the conductive liquid is preferred because the droplets of the conductive liquid move more easily in the nonpolar oil compared to the use of air and the conductive liquid. Consequently, the conductive liquid can be moved at a high speed, and the display color can be switched at a high speed.

In the above description, the black colored conductive liquid and the color filter layer are used to form the pixels of R, G, and B colors on the display surface side. However, the present invention is not limited thereto, as long as a plurality of pixel regions are provided in accordance with a plurality of colors that enable full-color display to be shown on the display surface. Specifically the conductive liquids with different colors such as RGB, CMY composed of cyan (C), magenta (M), and yellow (Y), or RGBYC also can be used.

In the above description, the color filter layer is formed on the surface of the upper substrate (first substrate) that faces the non-display surface side. However, the present invention is not limited thereto, and the color filter layer may be formed on the surface of the first substrate that faces the display surface side or on the lower substrate (second substrate). Thus, the color filter layer is preferred compared to the use of the conductive liquids with different colors because the display element can be easily produced. Moreover, the color filter layer is also preferred because the effective display region and the non-effective display region can be properly and reliably defined with respect to the display space by the color filter (aperture) and the black matrix (light-shielding layer) included in the color filter layer, respectively

In the above description, the aperture shape of the aperture (i.e., the shape of the effective display region) is a pentagon. However, the display element of the present invention is not limited thereto, and the aperture shape can be, e.g., a rectangle.

As described in each of the above embodiments, it is preferable that the aperture shape of the aperture is determined based on the shape of one of the reference electrode and the scanning electrode that is provided in the effective display region. This is because the aperture shape of the aperture in the light-shielding layer can be appropriately determined, compared to the case where the aperture shape is not determined based on the shape of one of these electrodes.

### Industrial Applicability

The present invention is useful for a display element that can suppress an unnecessary movement of the conductive liquid and have excellent display quality even if the power consumption is reduced, and an electric device using the display element.

### Description of Reference Numerals

- 1: Image display apparatus (electric device)
- 2: Upper substrate (first substrate)
- 3: Lower substrate (second substrate)
- 4: Signal electrode
- 5: Reference electrode
- 5c, 5d: C-cut portion
- 5e, 5f: R-cut portion
- 6: Scanning electrode
- 6c, 6d: C-cut portion
- 6e, 6f: R-cut portion
- 7: signal driver (signal voltage application portion)
- 8: Reference driver (reference voltage application portion)
- 9: Scanning driver (scanning voltage application portion)
- 10: Display element
- 11: Color filter layer
- 11r, 11g, 11b: Color filter (aperture)
- 11s: Black matrix (light-shielding layer)
- 13: Dielectric layer
- 14, 14a,14b, 14a 1, 14a2: Rib (partition)
- 16: Conductive liquid
- 17: Oil (insulating fluid)
- S: Display space
- P: Pixel region
- P1: Effective display region
- P2: Non-effective display region

## Claims

1. A display element that comprises a first substrate provided on a display surface side, a second substrate provided on a non-display surface side of the first substrate so that a predetermined display space is formed between the first substrate and the second substrate, an effective display region and a non-effective display region that are defined with respect to the display space, and a conductive liquid sealed in the display space so as to be moved toward the effective display region or the non-effective display region, and that is capable of changing a display color on the display surface side by moving the conductive liquid,
wherein the display element comprises:
a plurality of signal electrodes that are placed in the display space so as to come into contact with the conductive liquid, and are also provided along a predetermined arrangement direction;
a plurality of reference electrodes that are provided on one of the first substrate and the second substrate so as to be electrically insulated from the conductive liquid and to be located on one of the effective display region side and the non-effective display region side, and are also arranged so as to intersect with the plurality of the signal electrodes; and
a plurality of scanning electrodes that are provided on one of the first substate and the second substrate so as to be electrically insulated from the conductive liquid and the plurality of the reference electrodes and to be located on the other of the effective display region side and the non-effective display region side, and are also arranged so as to intersect with the plurality of the signals electrodes,
wherein an end portion of each of the plurality of the reference electrodes that is opposite to a moving direction of the conductive liquid relative to the reference electrode and an end portion of each of the plurality of the scanning electrodes that is opposite to a moving direction of the conductive liquid relative to the scanning electrode are cut.

2. The display element according to claim 1, wherein the end portion of each of the plurality of the reference electrodes that is opposite to the moving direction of the conductive liquid relative to the reference electrode and the end portion of each of the plurality of the scanning electrodes that is opposite to the moving direction of the conductive liquid relative to the scanning electrode are cut based on a shape of the conductive liquid when no voltage is applied.

3. The display element according to claim 1 or 2, wherein each of the plurality of the reference electrodes has C-cut portions in the end portion that is opposite to the moving direction of the conductive liquid relative to the reference electrode so that the end portion is in the form of a polygon, and each of the plurality of the scanning electrodes has C-cut portions in the end portion that is opposite to the moving direction of the conductive liquid relative to the scanning electrode so that the end portion is in the form of a polygon.

4. The display element according to claim 1 or 2, wherein each of the plurality of the reference electrodes has R-cut portions in the end portion that is opposite to the moving direction of the conductive liquid relative to the reference electrode so that the end portion is in the form of a circular arc, and each of the plurality of the scanning electrodes has R-cut portions in the end portion that is opposite to the moving direction of the conductive liquid relative to the scanning electrode so that the end portion is in the form of a circular arc.

5. The display element according to any one of claims 1 to 4, wherein the plurality of the signal electrodes are provided along a predetermined arrangement direction, and
the plurality of the reference electrodes and the plurality of the scanning electrodes are alternately arranged so as to intersect with the plurality of the signal electrodes, and
wherein the display element comprises:
a signal voltage application portion that is connected to the plurality of the signal electrodes and applies a signal voltage in a predetermined voltage range to each of the signal electrodes in accordance with information to be displayed on the display surface side;
a reference voltage application portion that is connected to the plurality of the reference electrodes and applies one of a selected voltage and a non-selected voltage to each of the reference electrodes, the selected voltage allowing the conductive liquid to move in the display space in accordance with the signal voltage and the non-selected voltage inhibiting a movement of the conductive liquid in the display space; and
a scanning voltage application portion that is connected to the plurality of the scanning electrodes and applies one of a selected voltage and a non-selected voltage to each of the scanning electrodes, the selected voltage allowing the conductive liquid to move in the display space in accordance with the signal voltage and the non-selected voltage inhibiting a movement of the conductive liquid in the display space.

6. The display element according to any one of claims 1 to 5, wherein a plurality of pixel regions are provided on the display surface side,
the plurality of the pixel regions are located at each of the intersections of the plurality of the signal electrodes and the plurality of the scanning electrodes, and
the display space in each of the pixel regions is partitioned by a partition.

7. The display element according to claim 6, wherein the plurality of the pixel regions are arranged in a honeycomb array on the display surface side.

8. The display element according to claim 6 or 7, wherein the plurality of the pixel regions are provided in accordance with a plurality of colors that enable full-color display to be shown on the display surface side.

9. The display element according to any one of claims 1 to 8, wherein an insulating fluid that is not mixed with the conductive liquid is movably sealed in the display space.

10. The display element according to any one of claims 1 to 9, wherein a dielectric layer is formed on the surfaces of the plurality of the reference electrodes and the plurality of the scanning electrodes.

11. The display element according to any one of claims 1 to 10, wherein the non-effective display region is defined by a light-shielding layer that is provided on one of the first substrate and the second substrate, and
the effective display region is defined by an aperture formed in the light-shielding layer.

12. The display element according to claim 11, wherein an aperture shape of the aperture is determined based on a shape of one of the reference electrode and the scanning electrode that is located on the effective display region side.

13. An electric device comprising a display portion that displays information including characters and images,
wherein the display portion comprises the display element according to any one of claims 1 to 12.
